# EUROPÄISCHE PATENTSCHRIFT

(11) **EP 3 551 421 B1**
(45) Veröffentlichungstag und Bekanntmachung des Hinweises auf die Patenterteilung: **22.01.2025**
(21) Anmeldenummer: 17825731.7
(22) Anmeldetag: 22.11.2017
(51) Int. Cl.: B29C 48/154, B29C 48/92, B29C 48/03, B29C 48/34

(54) **EXTRUSIONSEINRICHTUNG, EXTRUDER UND VERFAHREN ZUM UMMANTELN VON DRÄHTEN, KABELVORPRODUKTEN ODER LITZEN**
EXTRUSION SYSTEM, EXTRUDER AND METHOD FOR COATING WIRES, CABLE PRE-PRODUCTS OR STRANDED CONDUCTORS
DISPOSITIF D'EXTRUSION, EXTRUDEUSE ET PROCÉDÉ POUR ENVELOPPER DES FILS, DE PRODUITS SEMI-FINIS DE CÂBLES OU DES TRESSES

(30) Priorität: 08.12.2016 DE 102016123736
(43) Veröffentlichungstag der Anmeldung: 16.10.2019
(60) Teilanmeldung: 24196601.9
(73) Patentinhaber: BizLink Industry Germany GmbH, 91154 Roth (DE)
(72) Erfinder: THIEDE, Jörg, 21696 Gehlenberg (DE); ENGLER, Benedikt, 26129 Oldenburg (DE)
(74) Vertreter: Weidner Stern Jeschke
(86) Internationale Anmeldenummer: PCT/DE2017/101005
(87) Internationale Veröffentlichungsnummer: WO 2018/103785

(56) Entgegenhaltungen:
- EP-A1- 0 513 616
- DE-A1- 102008 061 286
- JP-A- 2009 166 244
- JP-A- S6 071 221
- US-A- 4 551 087
- US-A- 5 795 531
- US-A1- 2002 158 357

## Beschreibung

Die Erfindung betrifft eine Extrusionseinrichtung zum Ummanteln von Drähten, Kabelvorprodukten oder Litzen, wobei die Extrusionseinrichtung einen Extrusionskopf mit einer Vorproduktführung und eine Formmatrize aufweist, wobei die Vorproduktführung und die Formmatrize derart zueinander angeordnet sind, dass durch eine Öffnung der Vorproduktführung eine Formmasse durch die Formmatrize zu einem extrudierten Formstück formbar ist. Des Weiteren betrifft die Erfindung einen Extruder und ein Verfahren zum Ummanteln von Drähten, Kabelvorprodukten und Litzen.

Zur Extrusion werden üblicherweise feste bis flüssige härtbare Massen unter Druck und/oder erhöhter Temperatur kontinuierlich mittels einer Düse durch eine Formmatrize (Mundstück) zu einem langen Formstück gepresst. Die Extrusion wird beispielsweise zum Ummanteln von Drähten, Kabelvorprodukten und Litzen verwendet, wobei der Mantel aus der Formmasse auf die Drähte, Kabelvorprodukte oder Litzen aufgebracht wird.

Bei der Extrusion führen bereits geringste Unterschiede in der Temperatur und/oder im Druck und die Notwendigkeit der Fertigung unter sehr engen Toleranzen dazu, dass häufig die ersten 200 m bis 500 m der ummantelten Drähte, Kabelvorprodukte oder Litzen als Abfall entsorgt werden müssen.

Beim Extrudieren ist es besonders wichtig, dass die Öffnung der Vorproduktführung optimal zur Formmatrize ausgerichtet ist. Zudem muss die Ummantelung radial homogen um den Draht, das Kabelvorprodukt oder die Litze und zur Zentrier- und Längsachse erfolgen.

Beim Ummanteln von elektrischen Leitern (Drähte und Litzen) wird das Zentrieren der Vorproduktführung und/oder der Formmatrize üblicherweise manuell durchgeführt. Die Ausrichtung der Formmatrize erfolgt hierbei über eine Zentrierplatte, welche auf den Extrusionskopf mit der Vorproduktführung aufgesetzt ist. Mittels Verschraubpositionen an der Zentrierplatte wird ein Kippen der Zentrierplatte und somit der Formmatrize durchgeführt. Durch die Beschränkung auf das Kippen und die händische Einstellung, erfolgt die Ausrichtung von Vorproduktführung und Formmatrize zueinander nicht fein genug, um geforderte, sehr geringe Fertigungstoleranzen zu erreichen.

Aus der DE 692 11 772 T2 (EP 0 513 616 81) ist eine Extrusionseinrichtung zum Ummanteln von Drähten, Kabelvorprodukten oder Litzen bekannt, wobei die Extrusionseinrichtung einen Extrusionskopf mit Vorproduktführung und eine Formmatrize aufweist.

Servomotoren, mittels deren Bewegungen zwei Zentriereinrichtungen zueinander ausgerichtet werden können, sind aus der US 5 795 531 A bekannt. Zudem wird ein Verfahren offenbart, bei dem ein durchlaufender Draht in den Extrusionskopf eingebracht wird.

In der US 4 551 087 A ist ein Verfahren zum Vergleichen der ermittelten Dicke zu einer Solldicke einer Isolationsschicht offenbart, wobei mittels Einstellwerkzeugen an einem Extrusionsgerät die Dicke der Isolationsschicht verändert werden kann.

Aus der DE 10 2008 061 286 A1 ist eine Extrusionsvorrichtung zur Herstellung von schlauchförmigen Hohlkörpern oder Ummantelungen bekannt, welche ein einstellbar positionierbares Mundstück im Bereich einer Extruderdüse aufweist.

Eine Vorrichtung, die einen Extruderkopf aufweist, der über eine Düse, eine Einlassdüse und eine Auslassdüse aufweist, um einen elektrischen Leiter hindurchzuführen und den elektrischen Leiter dabei mit einer Dämmschicht zu ummanteln ist aus der US 4 668 173 A bekannt.

In der DE 87 04 664 U1 ist eine Vorrichtung mit Zentriereinrichtung zur Herstellung von Rohren offenbart, wobei die Zentriervorrichtung bewegliche Keile aufweist und der Vorrichtung eine Messeinrichtung zugeordnet ist, die die Wanddickenverteilung überprüft.

In der JP 2009 166244 A wird eine Extrusionseinrichtung zum Ummanteln eines elektrischen Kabels beschrieben, bei welcher die Extrusionsform die Vorproduktführung innerhalb eines Kreuzkopfhauptkörpers umgibt und die Extrusionsmasse durch einen Spalt zwischen der Extrusionsform und der Vorproduktführung geführt wird. Zur Zentrierung ist die Extrusionsform von vier rotierbaren Verbindungselementen umgeben, welche jeweils an ihrem einen Ende rotierbar über einen Rotationsschaft an dem Kreuzkopfhauptkörper befestigt sind und auf deren entgegengesetzten Enden jeweils ein Anpassungsschraube einwirken kann, welche jeweils durch eine Bohrung durch den Kreuzkopfhauptkörper geführt ist. Anstelle der außermittig zur Extrusionsform angeordneten Anpassungsschrauben zum Bewirken der Rotationsbewegungen der Verbindungselemente werden auch Antriebe betrieben durch elektrischen, pneumatischen, hydraulischen Druck vorgeschlagen. In der JP S6071221 A werden als Antriebsquellen Statormotoren offenbart, welche die Einstellschrauben einer Form rotieren.

Aus der DE 10 2014 103 101 A1 ist eine Vorrichtung bekannt, die zur Herstellung von blasgeformten Kunststoffhohlkörpern geeignet ist, wobei schlauchförmige Vorformlinge aus mehreren nebeneinander angeordneten Extrusionswerkzeugen eines Mehrfachextrusionskopfes zeitgleich extrudiert und Blasformkavitäten einer Schließeinheit zugeführt werden.

Die US 2002/158357 A1 offenbart eine Extrusionsvorrichtung, bei welcher die Form mit einer runden Oberfläche entlang ihrer Längsachse gut passend in einer runden Aufnahme von einem Formhalter umgeben ist. Die Position der Form kann mittels zweier, rechtwinklig zueinander angeordneten Einstellschrauben in dem Formhalter angepasst werden, wobei die Einstellschrauben den Formhalter entlang zweier unterschiedlicher senkrecht seitlicher Richtungen schieben oder ziehen. Anstelle der Einstellschrauben kann die Position der Form auch durch den Einbau von elektrischen Treibervorrichtungen, wie piezoelektrischen Aktoren, angepasst werden.

Aufgabe der Erfindung ist es, den Stand der Technik zu verbessern.

Gelöst wird die Aufgabe durch eine Extrusionseinrichtung zum Ummanteln von Drähten, Kabelvorprodukten oder Litzen, wobei die Extrusionseinrichtung einen Extrusionskopf mit einer Vorproduktführung und eine Formmatrize aufweist, wobei die Vorproduktführung und die Formmatrize derart zueinander angeordnet sind, dass durch eine Öffnung der Vorproduktführung eine Formmasse durch die Formmatrize zu einem extrudierten Formstück formbar ist, und der Vorproduktführung und/oder der Formmatrize eine motorische Stelleinrichtung zugeordnet ist, wobei die motorische Stelleinrichtung einen Piezoaktor aufweist und der Piezoaktor an der Vorproduktführung und/oder an der Formmatrize angeordnet ist, sodass im Falle eines Anlegens eines Stellsignals an die motorische Stelleinrichtung mittels einer direkten linearen Bewegung des Piezoaktors die Vorproduktführung und die Formmatrize zueinander ausrichtbar sind.

Durch das Ausrichten der Vorproduktführung und der Formmatrize zueinander mittels der motorischen Stelleinrichtung ist eine feinere Einstellung möglich, so dass bessere Zentrizitätswerte und somit bessere Produkteigenschaften erreicht werden. Zudem wird eine bessere Reproduzierbarkeit der Produktqualitäten erzielt.

Es ist besonders vorteilhaft, dass ein schnelleres Ausrichten der Vorproduktführung und der Formmatrize zueinander sowohl beim Einfahren als auch beim Vorliegen von veränderten Fertigungsparametern und Störungen erfolgt. Somit kann der Materialverbrauch, der Ausschuss und die zu entsorgende Abfallmenge (Schrott) reduziert werden.

Durch Anlegen des Stellsignals wird ein sehr genaues, automatisches Zentrieren des Extrusionskopfes und/oder der Formmatrize ermöglicht.

Vorteilhaft ist weiterhin gegenüber dem Stand der Technik, dass eine kippbare Zentrierplatte eines Vorkopfes des Extrusionskopfes entfällt und durch die motorische Stelleinrichtung selbst und/oder der Vorkopf nicht mehr zwingend fest lokalisiert werden muss oder müssen, sondern beispielsweise separat auf einer verschiebbaren Schiene angeordnet werden kann oder können. Somit sind eine bessere Zugänglichkeit zur Stelleinrichtung und/oder zum Vorkopf und eine bessere Austauschbarkeit gegeben.

Ein wesentlicher Gedanke der Erfindung beruht darauf, dass durch Anlegen eines Stellsignals an die motorische Stelleinrichtung mittels einer dadurch bewirkten Bewegung der motorischen Stelleinrichtung ein sehr definiertes und feines Ausrichten der Vorproduktführung und der Formmatrize zueinander erfolgt.

Es ist besonders vorteilhaft, dass eine direkte lineare Proportionalität zwischen dem angelegten Stellsignal und der Stellbewegung der motorischen Stelleinrichtung besteht.

Folgendes Begriffliche sei erläutert:

Eine "Extrusionseinrichtung" ist insbesondere eine Einrichtung zum Extrudieren einer Formmasse durch eine Vorproduktführung und eine Formmatrize zu einem extrudierten Formstück. Eine Extrusionseinrichtung ist insbesondere eine Einrichtung zum Ummanteln von Drähten, Kabelvorprodukten oder Litzen. Mittels einer Extrusionseinrichtung erfolgt insbesondere eine Kalt-, Warm- und/oder Heißextrusion. Die Extrusionseinrichtung arbeitet insbesondere bei einem Druck von 10 bar bis 1500 bar einer Temperatur von 10 °C bis 500 °C. Bei einer Extrusionseinrichtung kann es sich aber insbesondere auch um eine Einrichtung zur Rohr-, Profil- und/oder Folienextrusion sowie zum Strangpressen handeln. Eine Extrusionseinrichtung weist insbesondere einen Extrusionskopf, eine Vorproduktführung, eine Formmatrize und/oder einen separaten oder integrierten Vorkopf zum Extrusionskopf auf. Bei einer Extrusionseinrichtung kann es sich insbesondere auch direkt um den Extrusionskopf handeln, welcher neben der Vorproduktführung auch die Formmatrize aufweist.

Ein "Draht" ist insbesondere ein dünn, lang und/oder biegsam geformtes Metall mit kreisförmigem Querschnitt. Bei einem Draht kann es sich aber auch um einen Flach-, Vierkant- oder Profildraht handeln. Ein Draht besteht insbesondere aus Kupfer, Aluminium oder einer Kupferlegierung.

Eine "Litze" ist ein aus dünnen Einzeldrähten bestehender elektrischer Leiter und insbesondere leicht verbiegbar. Als Abgrenzung zu unflexiblen eindrähtigen und/oder mehrdrähtigen Adern wird eine Litze insbesondere auch als fein- oder feinstdrähtiger Leiter bezeichnet. Bei Hochfrequenz-Litzen sind die Einzeldrähte voneinander insbesondere durch eine Lackschicht isoliert. Eine Litze weist insbesondere Kupfer auf. Die Einzeldrähte der Litze sind insbesondere von einer gemeinsamen Isolierhülle umschlossen (Litzenleitung). Sind insbesondere mehrere Litzenleitungen in einem Kabel vereint, so werden diese Adern genannt. Eine Litze weist eine Dicke von 0,004mm bis 4mm auf.

Eine "Ader" ist insbesondere eine einzelne Leitung innerhalb eines Bündels eines Kabels. Bei einer Ader handelt es sich üblicherweise um einen isolierten Draht oder Litze. Ein mit Isolierstoffen ummantelter ein- oder mehradriger Verbund von Adern bildet insbesondere ein "Kabelvorprodukt". Eine Ader weist als Leiterwerkstoff insbesondere Kupfer, Aluminium, Silber, Stahl und/oder Blei auf. Eine Ader weist insbesondere eine Dicke von 0,1mm bis 15mm auf.

Unter "Ummanteln" wird insbesondere das Extrudieren (Aufspritzen) eines Mantels außen um einen Draht, ein Kabelvorprodukt oder eine Litze verstanden. Das Ummanteln dient insbesondere der Isolation und/oder Abschirmung des Drahtes, Kabelvorproduktes oder der Litze. Zum Ummanteln werden insbesondere Kunststoffe wie Polyolefine, Polyurethan, Polyvinylchlorid, Polytetrafluorethylen (PTFE) und/oder Silikon als Formmasse verwendet.

Ein "Extrusionskopf" ist insbesondere ein Bauteil, welches die fließfähige Formmasse unter Druck aufnimmt und über Strömungskanäle der Vorproduktführung zuführt. Gleichzeitig kann ein Extrusionskopf insbesondere ein durchlaufendes Vormaterial, wie einen Draht, Kabelvorprodukt oder eine Litze, aufnehmen. Neben der Vorproduktführung kann ein Extrusionskopf auch insbesondere eine Formmatrize aufweisen oder die Formmatrize ist dem Extrusionskopf zugeordnet. In dem Extrusionskopf ist oder sind insbesondere ein oder mehrere Extruder und/oder ein oder mehrere Förderaggregate zum Zuführen der Formmasse angeordnet.

Eine "Vorproduktführung" ist insbesondere eine Düse mit einer Öffnung, durch welche insbesondere ein Draht, Kabelvorprodukt oder eine Litze kontinuierlich geführt und/oder die Formmasse kontinuierlich gepresst (extrudiert) wird. Eine Düse ist insbesondere eine sich verjüngende rohrförmige technische Vorrichtung mit einer Öffnung am kleinsten verjüngten Querschnitt. Eine Vorproduktführung ist insbesondere auch ein Konfuser. Bei einer Vorproduktführung kann es sich um eine Extrusionsdüse handeln.

Eine "Formmatrize" ist insbesondere ein Werkzeug, welches der die Vorproduktführung verlassenen Formmasse eine Form aufprägt. Eine Formmatrize wird insbesondere auch als Mundstück bezeichnet. Die Formmasse fließt insbesondere durch das Innere der Formmatrize und füllt dabei die innere Form der Formmatrize aus. Im Fall von durchlaufendem Vormaterial wie Drähte, Kabelvorprodukte oder Litzen wird dieses insbesondere zentrisch durch die Formmatrize geführt, wobei die Formmasse die Außenfläche des Vormaterials ummantelt und selbst als äußere Oberfläche die Form der inneren Oberfläche der Formmatrize annimmt.

Eine "motorische Stelleinrichtung" ist insbesondere eine Stelleinrichtung, welche auf Bewegung bezogen ist. Eine motorische Stelleinrichtung ist insbesondere eine Einrichtung, welche eine Bewegung ausführt und/oder erzeugt. Eine motorische Stelleinrichtung führt insbesondere eine lineare Längenausdehnung und/oder -bewegung aus. Bei einer motorischen Stelleinrichtung ist insbesondere die Länge der linearen Bewegung (Stellweg) proportional zu einem angelegten Stellsignal. Bei einer motorischen Stelleinrichtung handelt es sich insbesondere um einen Linearmotor, Exzenter, Spindelverstellung und/oder einen Piezoaktor.

Unter einem "Stellsignal" ist insbesondere ein elektrisches oder pneumatisches Signal zu verstehen. Bei einem Stellsignal handelt es sich insbesondere um ein normiertes Einheitssignal, beispielsweise ein Stromsignal vom 0mA bis 20mA oder ein Spannungssignal von 0V bis 10V. Durch Anlegen des Stellsignals an die motorische Stelleinrichtung wird insbesondere eine definierte Bewegung der motorischen Stelleinrichtung induziert. Das Anlegen des Stellsignals kann manuell und/oder automatisch erfolgen. Beispielsweise kann durch manuelles Drehen eines Drehknopfes mit Schrittskalierung das Stellsignal schrittweise erhöht und somit die Bewegung der motorischen Stelleinrichtung schrittweise verlängert werden. Ebenso kann das Anlegen des Stellsignals automatisch über eine Steuer- und/oder Regeleinrichtung der Extrusionseinrichtung und/oder einer externen Einrichtung erfolgen.

Eine "Bewegung" ist insbesondere eine geradlinige Bewegung oder eine Bewegung auf einer gekurvten Bahn der motorischen Stelleinrichtung, wodurch wiederum ein getriebenes Objekt, wie beispielsweise die Formmatrize und/oder Vorproduktführung, in Bewegung gesetzt wird. Eine Bewegung ist insbesondere eine Ortsveränderung der motorischen Stelleinrichtung und/oder der Vorproduktführung und/oder der Formmatrize.

Unter "Ausrichten" wird insbesondere ein räumliches Anordnen der Vorproduktführung und der Formmatrize zueinander verstanden, sodass eine Formmasse optimal durch die Öffnung der Vorproduktführung und der nachfolgenden Formmatrize zu einem extrudierten Formstück geformt wird. Das Ausrichten umfasst insbesondere auch das Zentrieren, bei dem ein Ausrichten auf den Mittelpunkt oder die Mittelachse (Zentrierachse) von Bauteilen erfolgt. Insbesondere werden die Vorproduktführung und die Formmatrize so zueinander zentriert, dass eine geringe Exzentrizität (als Maß für die Abweichung von der Kreisform) eines gefertigten Formstückes und/oder eines ummantelten Drahtes, Kabelvorproduktes oder Litze besteht.

In einer weiteren Ausführungsform weist die Extrusionseinrichtung eine Aufnahmeeinrichtung zur Aufnahme eines durchlaufenden Vormaterials, insbesondere eines Drahtes, Kabelvorproduktes oder einer Litze, auf, sodass das Vormaterial mit der Formmasse ummantelbar ist.

Somit kann nicht nur eine optimale Ausrichtung der Vorproduktführung und der Formmatrize zueinander, sondern auch deren Ausrichtung in Bezug auf ein aufgenommenes, durchlaufendes Vormaterial erfolgen.

Folglich ist eine optimale Draht-, Litzen-, Ader-, Mantel- und/oder Kabelextrusion realisierbar.

Erfindungsgemäß ist die motorische Stelleinrichtung an der Vorproduktführung und/oder an der Formmatrize angeordnet.

Dadurch ist eine freie Positionierung der motorischen Stelleinrichtung zur Ausrichtung der Vorproduktführung und/oder der Formmatrize möglich. Die motorische Stelleinrichtung wirkt direkt an der Vorproduktführung und/oder der Formmatrize.

Um eine definierte lineare Bewegung zu erzeugen, weist die motorische Stelleinrichtung einen Piezoaktor auf.

Somit wird die elektrische Energie des Stellsignales mittels des Piezoaktors direkt in eine mechanische, lineare Längenausdehnung und/oder in eine lineare Bewegung im Nanometer-Bereich überführt.

Zudem kann bei Verwenden eines Piezoaktors aufgrund seiner Temperaturbeständigkeit bis zu 250 °C eine Fertigung bei hohen Temperaturen und ohne Beeinträchtigung der Produktqualität realisiert werden.

Ein "Piezoaktor" ist insbesondere ein Bauteil, welches den Piezoeffekt ausnutzt, um durch Anlegen einer elektrischen Spannung eine mechanische Bewegung auszuführen. Bei einem Piezoaktor handelt es sich insbesondere um einen Piezostapel in Sandwich-Bauweise. Ein Piezoaktor weist insbesondere eine Piezokeramik auf. Der Piezostapel eines Piezoaktors ist üblicherweise in einem Gehäuse untergebracht, wobei zwischen Gehäuse und Piezokeramik insbesondere eine Vorspannung aufgebracht wird, um Zugkräfte durch das getrieben Objekt zu vermeiden. Ein Piezoaktor weist insbesondere eine Führung, beispielsweise eine biegsame Festkörperführung, auf. Ein Piezoaktor bewirkt insbesondere durch seine Längenausdehnung eine Bewegung.

Um eine schnelles und flexibles Ausrichten in die verschiedenen Raumrichtungen zu ermöglichen, weist die motorische Stelleinrichtung einen zweiten Piezoaktor, einen dritten , Piezoaktor, einen vierten und/oder Piezoaktoren auf.

Somit können gleichzeitig mehrere Bewegungen aus verschiedenen Richtungen zum Ausrichten der Vorproduktführung und der Formmatrize zueinander verwendet werden.

Ein zweiter, dritter, vierter und/oder weiterer Piezoaktor entspricht dem oben definierten Piezoaktor, wobei jeder einzelne Piezoaktor an unterschiedlicher Position in der Extrusionseinrichtung angeordnet ist.

In einer weiteren Ausführungsform der Extrusionseinrichtung weist oder weisen der Piezoaktor oder die Piezoaktoren einen Stellweg im Bereich von 0,01 nm bis 1 mm, bevorzugt von 0,1 nm bis 200 um auf.

Folglich kann eine sehr präzise und sehr feine Einstellung der Ausrichtung der Vorproduktführung und/oder der Formmatrize erzielt werden. Somit können sehr geringe Fertigungstoleranzen von ± 0,05 mm erreicht und somit die Produktqualität verbessert werden.

Ein "Stellweg" ist insbesondere die Längenänderung eines Piezoaktors oder der Verschiebeweg eines Linearmotors oder Exzenters.

Um ein kontinuierliches Ausrichten und Anpassen der Ausrichtung der Vorproduktführung und der Formmatrize während der Fertigung zu ermöglichen, ist oder sind der Extrusionseinrichtung eine Messeinrichtung zum Bestimmen mindestens einer Messgröße eines extrudierten Formstückes und/oder eine Steuer- und/oder Regeleinrichtung zugeordnet, sodass in Abhängigkeit von der bestimmten Messgröße das Stellsignal an die motorische Stelleinrichtung anlegbar ist.

Dadurch kann beispielsweise kontinuierlich der Ist-Zentrizitätswert des Formstückes oder des aufgebrachten Mantels des ummantelten Drahtes, Kabelvorproduktes oder Litze erfasst und zum Steuern und/oder Regeln der motorischen Stelleinrichtung verwendet werden.

Es ist besonders vorteilhaft, dass dadurch der Außendurchmesser, die Ovalität, Wanddicke und Exzentrizität sowie die Schräglage eines ummantelten Drahtes, Kabelvorproduktes oder Litze bestimmt und mittels der Extrusionseinrichtung und/oder der Steuer- und/oder Regeleinrichtung eine Korrektur dieser Parameter direkt während der Fertigung erfolgen kann.

Folglich kann ein "Weglaufen" der Exzentrizität während der Fertigung verhindert werden und ein Ausgleichen von Langzeitschwingungen erfolgen.

Eine "Messeinrichtung" ist insbesondere eine Gesamtheit aller Messgeräte und zusätzlicher Einrichtungen zum Erzielen eines Messergebnisses. Eine Messeinrichtung weist insbesondere ein Messgerät oder mehrere Messgeräte auf, welche zur Messung einer Messgröße vorgesehen sind. Eine Messeinrichtung und/oder ein Messgerät weist oder weisen insbesondere einen Messgrößenaufnehmer (Sensor) auf. Bei einer Messeinrichtung handelt es sich insbesondere um eine Online-Messeinrichtung zum berührungslosen und kontinuierlichen Vermessen von Adern, Drähten, Litzen und/oder Kabeln. Die Messeinrichtung führt insbesondere eine Acht-Punkt-Exzentrizitäts-, Vier-Achs-Durchmesser- und/oder Acht-Punkt-Ovalitäts-Messung durch. Die Messeinrichtung weist insbesondere zwei optische Messgeräte und ein induktives Messgerät zur Messung der Konzentrizität eines Drahtes, Kabelvorproduktes oder Litze in der Isolation (Mantel) und der Produktparameter Außendurchmesser, Ovalität und Wanddicke auf. Zudem erfasst die Messeinrichtung insbesondere eine Schräglage des Drahtes, Kabelvorproduktes oder Litze in einer Messebene und somit zur Zentrierachse der Extrusionseinrichtung.

Eine "Steuereinrichtung" ist insbesondere eine Einrichtung, bei welcher eine oder mehrere Größen als Eingangsgröße andere Größen als Ausgangsgrößen aufgrund von Systembedingungen beeinflusst. Bei einer Steuereinrichtung handelt es sich insbesondere um eine Einrichtung, welche beabsichtigt das Verhalten der Extrusionseinrichtung beeinflusst. Insbesondere wird mit der Steuereinrichtung ein Stellsignal an die motorische Stelleinrichtung vorgegeben.

Eine "Regeleinrichtung" ist insbesondere eine Einrichtung, bei welcher eine Größe als Regelgröße kontinuierlich erfasst, mit einer anderen Größe als Führungsgröße verglichen und in Abhängigkeit des Ergebnisses dieses Vergleiches zur Abgleichung an die Führungsgröße beeinflusst wird. Eine Regeleinrichtung verwendet insbesondere einen geschlossenen Regelkreis. Bei Verwenden einer Regeleinrichtung wird insbesondere der Sollwert, beispielsweise die vorgegebenen Exzentrizität, mit dem gemessenen Ist-Exzentrizitätswert der Messeinrichtung (Regelgröße) verglichen und aufgrund der Abweichung vom Sollwert wird ein Stellsignal von der Regeleinrichtung an die motorische Stelleinrichtung angelegt, um die Ausrichtung der Vorproduktführung und/oder der Formmatrize zu optimieren und somit den Sollwert der Exzentrizität einer gefertigten Ader oder Litze zu erreichen.

Eine "Messgröße" ist insbesondere diejenige physikalische Größe, welcher eine Messung gilt. Die Messgröße war oder ist insbesondere das Ziel einer Messung. Die Messgröße muss nicht unmittelbar Gegenstand der Messung sein, sondern kann auch über physikalische und/oder mathematische Gesetzmäßigkeiten aus einer Größe oder mehreren Größen bestimmt werden. Bei der Messgröße handelt es sich insbesondere um eine physikalische Eigenschaft des extrudierten Formstückes oder der ummantelten Drähte, Kabelvorprodukte oder Litzen. Die Messgröße ist insbesondere der Durchmesser, die Ovalität, Wanddicke, Konzentrizität, Schräglage und/oder Biegelage eines Drahtes, Kabelvorproduktes oder einer Litze.

In einem weiteren Aspekt der Erfindung wird die Aufgabe gelöst durch einen Extruder zum Ummanteln von Drähten, Kabelvorprodukten oder Litzen, wobei der Extruder eine zuvor beschriebene Extrusionseinrichtung aufweist.

Somit wird ein Extruder mit optimaler Steuerung und/oder Regelung des Extrusionsprozesses und zum Fertigen von verbesserten Produkteigenschaften durch genauere Zentrizitätswerte oder andere gewünschte Produktparameter bereitgestellt.

Vor allem ist mittels des Extruders eine reproduzierbare Qualität der extrudierten Formstücke und ummantelten Drähten, Kabelvorprodukten oder Litzen zu erzielen.

Ein "Extruder" ist insbesondere eine Fertigungseinrichtung zur Extrusion. Bei einem Extruder handelt es sich insbesondere um einen Kolbenextruder oder um einen Schneckenextruder mit einer, zwei oder mehreren Schneckenwellen. Zudem weist ein Extruder insbesondere einen Antrieb, eine Extrusionskopf mit einer Vorproduktführung, eine Formmatrize, einen Vorkopf und/oder eine Messeinrichtung auf.

In einem zusätzlichen Aspekt der Erfindung wird die Aufgabe gelöst durch ein Verfahren zum Ummanteln von Drähten, Kabelvorprodukten oder Litzen mittels einer zuvor beschriebenen Extrusionseinrichtung mit einer zuvor beschriebenen Messeinrichtung und/oder einer zuvor beschriebenen Steuer- und/oder Regeleinrichtung und/oder einem zuvor beschriebenen Extruder, mit folgenden Schritten:
- Einbringen eines durchlaufenden Drahtes, Kabelvorproduktes oder einer durchlaufenden Litze in den Extrusionskopf,
- Extrudieren der Formmasse durch die Vorproduktführung und die Formmatrize zu einem ummantelten Draht, Kabelvorprodukt oder einer ummantelten Litze,
- Bestimmen mindestens einer Messgröße der ummantelten Drähte, Kabelvorprodukte oder der ummantelten Litze mittels der Messeinrichtung,
- Verwenden der bestimmten Messgröße zum Generieren des Stellsignals,
- Regeln und/oder Steuern der motorischen Stelleinrichtung durch Anlegen des Stellsignals,
- Bewegen der motorischen Stelleinrichtung gegen die Vorproduktführung und/oder die Formmatrize,
- Ausrichten der Vorproduktführung und/oder der Formmatrize zueinander und
- Ausbringen eines zentriert ummantelten Drahtes, Kabelvorproduktes oder einer zentriert ummantelten Litze.

Somit wird insbesondere ein Verfahren zum Ummanteln von Drähten, Kabelvorprodukten oder Litzen bereitgestellt, bei welchem mindestens eine Produkteigenschaft des gefertigten ummantelten Drahtes, Kabelvorproduktes oder Litze online und/oder kontinuierlich erfasst wird, und daraufhin durch Ausrichten der Vorproduktführung und der Formmatrize zueinander der Fertigungsprozess angepasst und im Sinne der gefertigten Produktqualität optimiert wird.

Somit erlaubt dieses Fertigungsverfahren neben einer höheren Produktqualität auch eine Reduzierung des Materialverbrauchs, des Ausschusses und der Abfallmenge. Zudem können Störungen des Fertigungsprozesses sofort erkannt und kompensiert werden.

Im Weiteren wird eine nicht erfindungsgemäße Extrusionseinrichtung mit konventioneller Ansteuerung über einen Ausrichtkörper beschrieben.

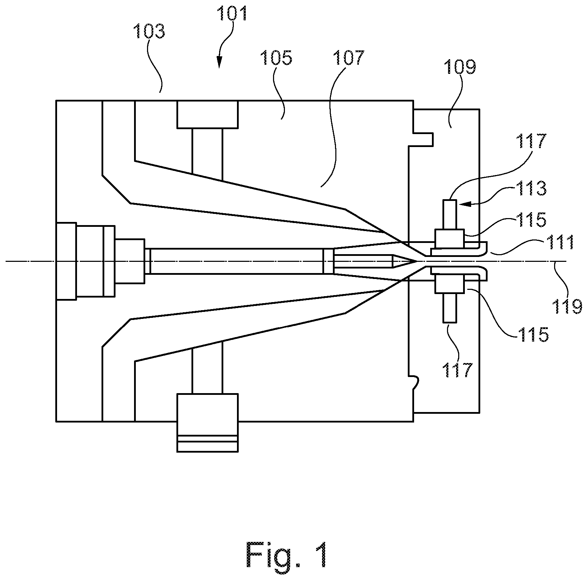

Es zeigt
- Figur 1: eine stark schematische Schnittdarstellung einer Extrusionseinrichtung mit Extrusionskopf, Vorproduktführung, Mundstück und Zentriereinrichtung.

Eine Extrusionseinrichtung 101 weist einen Extrusionskopf 103 mit einem Kopfgehäuse 105 und einer innenliegenden Vorproduktführung 107 auf. An den Extrusionskopf 103 ist ein Vorkopf 109 angeordnet.

Der Vorkopf 109 weist eine Zentriereinrichtung 113 auf. Die Zentriereinrichtung 113 umfasst ein Mundstück 111, einen Ausrichtungsring 115 und vier Piezoaktoren 117. Die vier Piezoaktoren 117 sind im Abstand von 90° außen am Ausrichtring 115 angeordnet (aus zeichnerischen Gründen sind die zwei Piezoaktoren, welche in die Bildebene und aus der Bildebene herausragen nicht gezeigt).

Der Extrusionseinrichtung 101 ist eine Zentrierachse 119 zugeordnet. Hinter der Extrusionseinrichtung 101 ist eine nicht gezeigte Messeinrichtung zur Messung der Zentrizität angeordnet. Des Weiteren gehört zu der Extrusionseinrichtung 101 eine nicht gezeigte Regeleinrichtung.

Folgende Arbeitsvorgänge werden mit der Extrusionseinrichtung 101 realisiert:
Eine Litze mit 0,25mm Außendurchmesser wird in den Extrusionskopf 103 eingebracht und durchläuft diesen und das Mundstück 101 kontinuierlich. Fliessfähiges Polyethylen (PE) wird bei einer Temperatur von 220 °C und einem Druck von 300 bar durch die Vorproduktführung 107 und das Mundstück 111 gepresst und ummantelt die durchlaufende Litze.

Mittels der nicht gezeigten Messeinrichtung (Centerview 8000 der Firma Sikora) wird online und kontinuierlich die Zentrizität der gefertigten ummantelten Litze bestimmt. Die Messung ergibt, dass ein Exzentrizitätsausgleich von 1,15 (maximale Manteldicke zu minimaler Manteldicke) notwendig ist. Daraufhin wird von der nicht gezeigten Regeleinrichtung ein Stellsignal generiert und an die Zentrierungseinrichtung 113 gegeben. Daraufhin führt der obere Piezoaktor 117 eine Hubbewegung von 150 bei einer Aktorlänge von 45 mm gegen den Ausrichtring 115 aus, wodurch das Mundstück 111 in Bezug zur Zentrierachse 119 und zur Vorproduktführung 107 ausgerichtet wird. Anschließend wird eine besser zentrierte, ummantelte Litze aus der Extrusionseinrichtung 101 ausgebracht. Das Bestimmen der Zentrizität durch die Messeinrichtung wird während der Fertigung kontinuierlich wiederholt.

Somit wird ein Verfahren zum Ummanteln der Litze bereitgestellt, welches eine radial und longitudinal gleichmäßige Ummantelung der Litze realisiert und dadurch deren Funktionalität garantiert.

## Patentansprüche

1. Extrusionseinrichtung (101) zum Ummanteln von Drähten, Kabelvorprodukten oder Litzen, wobei die Extrusionseinrichtung einen Extrusionskopf (103) mit einer Vorproduktführung (107) und eine Formmatrize (111) aufweist, wobei die Vorproduktführung (107) und die Formmatrize (111) derart zueinander angeordnet sind, dass durch eine Öffnung der Vorproduktführung (107) eine Formmasse durch die Formmatrize (111) zu einem extrudierten Formstück formbar ist, und der Vorproduktführung (107) und/oder der Formmatrize (111) eine motorische Stelleinrichtung (113) zugeordnet ist, **dadurch gekennzeichnet, dass** die motorische Stelleinrichtung (113) einen Piezoaktor (117) aufweist und der Piezoaktor (117) an der Vorproduktführung und/oder an der Formmatrize (111) angeordnet ist, sodass im Falle eines Anlegens eines Stellsignals an die motorische Stelleinrichtung (113) mittels einer direkten linearen Bewegung des Piezoaktors (117) die Vorproduktführung (107) und die Formmatrize (111) zueinander ausrichtbar sind.

2. Extrusionseinrichtung (101) nach Anspruch 1, **dadurch gekennzeichnet, dass** die Extrusionseinrichtung (101) eine Aufnahmeeinrichtung zur Aufnahme eines durchlaufenden Vormaterials, insbesondere eines Drahtes, Kabelvorproduktes oder einer Litze, aufweist, sodass das Vormaterial mit der Formmasse ummantelbar ist.

3. Extrusionseinrichtung (101) nach einem der vorherigen Ansprüche, **dadurch gekennzeichnet, dass** die motorische Stelleinrichtung (101) einen zweiten Piezoaktor, einen dritten Piezoaktor, einen vierten Piezoaktor und/oder weitere Piezoaktoren (117) aufweist.

4. Extrusionseinrichtung (101) nach einem der vorherigen Ansprüche, **dadurch gekennzeichnet, dass** der Piezoaktor oder die Piezoaktoren (117) einen Stellweg im Bereich von 0,01nm bis 1mm, bevorzugt von 0,1nm bis 200pm aufweist.

5. Extrusionseinrichtung (101) nach einem der vorherigen Ansprüche, **dadurch gekennzeichnet, dass** der Extrusionseinrichtung (101) eine Messeinrichtung zum Bestimmen mindestens einer Messgröße eines extrudierten Formstückes und/oder eine Steuer- und/oder Regeleinrichtung zugeordnet ist oder sind, sodass in Abhängigkeit von der bestimmten Messgröße das Stellsignal an die motorische Stelleinrichtung anlegbar ist.

6. Extruder zum Ummanteln von Drähten, Kabelvorprodukten oder Litzen, **dadurch gekennzeichnet, dass** der Extruder eine Extrusionseinrichtung (101) nach einem der Ansprüche 1 bis 5 aufweist.

7. Verfahren zum Ummanteln von Drähten, Kabelvorprodukten oder Litzen mittels einer Extrusionseinrichtung (101) nach Anspruch 5 und/oder einem Extruder nach Anspruch 6, **gekennzeichnet durch** folgende Schritte
- Einbringen eines durchlaufenden Drahtes, Kabelvorproduktes oder einer durchlaufenden Litze in den Extrusionskopf,
- Extrudieren der Formmasse durch die Vorproduktführung (107) und die Formmatrize (111) zu einem ummantelten Draht, Kabelvorprodukt oder einer ummantelten Litze,
- Bestimmen mindestens einer Messgröße des ummantelten Drahtes, Kabelvorproduktes oder der ummantelten Litze mittels der Messeinrichtung,
- Verwenden der bestimmten Messgröße zum Generieren des Stellsignals,
- Regeln und/oder Steuern der motorischen Stelleinrichtung (113) durch Anlegen des Stellsignals,
- Direktes lineares Bewegen des Piezoaktors (117) gegen die Vorproduktführung (107) und/oder die Formmatrize (111)
- Ausrichten der Vorproduktführung (107) und/oder der Formmatrize (111) zueinander und
- Ausbringen eines zentriert ummantelten Drahtes, Kabelvorproduktes oder einer zentriert ummantelten Litze.

## Claims

1. Extrusion system (101) for coating wires, cable pre-products or stranded conductors, wherein the extrusion system has an extrusion head (103) with a pre-product guide (107) and a mould die (111), wherein the pre-product guide (107) and the mould die (111) are arranged in relation to one another in such a way that an opening of the pre-product guide (107) allows a moulding compound to be moulded by the mould die (111)into an extruded moulding, and the pre-product guide (107) and/or the mould die (111) are assigned a motorised adjusting device (113), **characterised in that** the motorised adjusting device (113) has a piezoelectric actuator (117) and the piezoelectric actuator (117) is arranged on the pre-product guide and/or on the mould die (111), such that, if an adjusting signal is applied to the motorised adjusting device (113) by means of a direct linear movement of the piezoelectric actuator (117), the pre-product guide (107) and the mould die (111) can be aligned in relation to one another.

2. Extrusion system (101) according to claim 1, **characterised in that** the extrusion system (101) has a receiving device for receiving a continuous pre-material, in particular a wire, cable pre-product or a stranded conductor, such that the pre-material can be coated with the moulding compound.

3. Extrusion system (101) according to any one of the preceding claims, **characterised in that** the motorised adjusting device (101) has a second piezoelectric actuator, a third piezoelectric actuator, a fourth piezoelectric actuator and/or further piezoelectric actuators (117).

4. Extrusion system (101) according to any one of the preceding claims, **characterised in that** the piezoelectric actuator(s) (117) has/have a travel range of 0.01 nm to 1 mm, preferably 0.1 nm to 200 µm.

5. Extrusion system (101) according to any one of the preceding claims, **characterised in that** the extrusion system (101) is assigned a measuring device for determining at least one measured variable of an extruded moulded part and/or a control and/or regulating device, such that the adjusting signal can be applied to the motorised actuator as a function of the determined measured variable.

6. Extruder for coating wires, cable pre-products or stranded conductors, **characterised in that** the extruder has an extrusion system (101) according to any one of claims 1 to 5.

7. Method for coating wires, cable pre-products or stranded conductors using an extrusion system (101) according to claim 5 and/or an extruder according to claim 6, **characterised by** the following steps:
- introducing a continuous wire, cable pre-product or a continuous stranded conductor into the extrusion head,
- extruding the moulding compound through the pre-product guide (107) and the mould die (111) to obtain a coated wire, cable pre-product or a coated stranded conductor,
- determining at least one measured variable of the coated wire, cable pre-product or the coated stranded conductor using the measuring device,
- using the determined measurement variable to generate the adjusting signal,
- regulating and/or controlling the motorised adjusting device (113) by applying the adjusting signal,
- direct linear movement of the piezoelectric actuator (117) against the pre-product guide (107) and/or the mould die (111),
- aligning the pre-product guide (107) and/or the mould die (111) with respect to each other, and
- outputting a centred coated wire, cable pre-product or a centred coated stranded conductor.

## Revendications

1. Dispositif d'extrusion (101) pour le gainage de fils, de produits précurseurs de câbles ou de torons, le dispositif d'extrusion présentant une tête d'extrusion (103) avec un guide de produit précurseur (107) et une matrice de moulage (111), le guide de produit précurseur (107) et la matrice de moulage (111) étant agencés l'un par rapport à l'autre de telle sorte qu'à travers une ouverture du guide de produit précurseur (107), une masse de moulage peut être moulée par la matrice de moulage (111) en une pièce moulée extrudée, et un dispositif de réglage motorisé (113) étant associé au guide de produit précurseur (107) et/ou à la matrice de moulage (111), **caractérisé en ce que** le dispositif de réglage motorisé (113) présente un actionneur piézoélectrique (117) et l'actionneur piézoélectrique (117) est agencé sur le guide de produit précurseur et/ou sur la matrice de moulage (111), de telle sorte que, dans le cas d'une application d'un signal de réglage au dispositif de réglage motorisé (113), le guide de produit précurseur (107) et la matrice de moulage (111) peuvent être orientés l'un par rapport à l'autre au moyen d'un déplacement linéaire direct de l'actionneur piézoélectrique (117).

2. Dispositif d'extrusion (101) selon la revendication 1, **caractérisé en ce que** le dispositif d'extrusion (101) présente un dispositif de réception pour la réception d'une matière première en transit, notamment d'un fil, d'un produit précurseur de câble ou d'un toron, de telle sorte que la matière première peut être gainée par la masse de moulage.

3. Dispositif d'extrusion (101) selon l'une quelconque des revendications précédentes, **caractérisé en ce que** le dispositif de réglage motorisé (101) présente un deuxième actionneur piézoélectrique, un troisième actionneur piézoélectrique, un quatrième actionneur piézoélectrique et/ou d'autres actionneurs piézoélectriques (117).

4. Dispositif d'extrusion (101) selon l'une quelconque des revendications précédentes, **caractérisé en ce que** l'actionneur piézoélectrique ou les actionneurs piézoélectriques (117) présentent une course de réglage dans la plage de 0,01 nm à 1 mm, de préférence de 0,1 nm à 200 µm.

5. Dispositif d'extrusion (101) selon l'une quelconque des revendications précédentes, **caractérisé en ce qu'au** dispositif d'extrusion (101) est ou sont associé(s) un dispositif de mesure pour la détermination d'au moins une grandeur de mesure d'une pièce moulée extrudée et/ou un dispositif de commande et/ou de régulation, de telle sorte que le signal de réglage peut être appliqué au dispositif de réglage motorisé en fonction de la grandeur de mesure déterminée.

6. Extrudeuse pour le gainage de fils, de produits précurseurs de câbles ou de torons, **caractérisée en ce que** l'extrudeuse présente un dispositif d'extrusion (101) selon l'une quelconque des revendications 1 à 5.

7. Procédé de gainage de fils, de produits précurseurs de câbles ou de torons au moyen d'un dispositif d'extrusion (101) selon la revendication 5 et/ou d'une extrudeuse selon la revendication 6, **caractérisé par** les étapes suivantes :
- l'introduction d'un fil continu, d'un produit précurseur de câble ou d'un toron continu dans la tête d'extrusion,
- l'extrusion de la masse de moulage à travers le guide de produit précurseur (107) et la matrice de moulage (111) en un fil gainé, un produit précurseur de câble ou un toron gainé,
- la détermination, d'au moins une grandeur de mesure du fil gainé, du produit précurseur de câble ou du toron gainé au moyen du dispositif de mesure,
- l'utilisation des grandeurs de mesure déterminées pour générer le signal de réglage,
- la régulation et/ou la commande du dispositif de réglage motorisé (113) par application du signal de réglage,
- le déplacement linéaire direct de l'actionneur piézoélectrique (117) contre le guide de produit précurseur (107) et/ou la matrice de moulage (111),
- l'orientation du guide de produit précurseur (107) et/ou de la matrice de moulage (111) l'un par rapport à l'autre, et
- la sortie d'un fil gainé de manière centrée, d'un produit précurseur de câble ou d'un toron gainé de manière centrée.
